Europäisches Patentamt

**European Patent Office**

**Office européen des brevets**

(11) Publication number: **0 118 314**
**B1**

(12) # EUROPEAN PATENT SPECIFICATION

(45) Date of publication of the patent specification:
**17.12.86**

(51) Int. Cl.⁴: **A 22 C 17/00**

(21) Application number: **84301499.4**

(22) Date of filling: **07.03.84**

(54) Portion pre-sliced roast beef product and process.

(30) Priority: **07.03.83 US 473067**

(43) Date of publication of application:
**12.09.84 Bulletin 84/37**

(45) Publication of the grant of the patent:
**17.12.86 Bulletin 86/51**

(84) Designated Contracting States:
**DE FR GB NL SE**

(56) References cited:
**WO-A-81/01249**
**GB-A-2 074 839**
**GB-A-2 085 742**
**US-A-3 663 233**
**US-A-3 753 741**

(73) Proprietor: **Granite State Packing Company, Inc.,**
**Manchester New Hampshire (US)**

(72) Inventor: **Sheehy, Roger C., 100 Arbor Drive,**
**Providence RI 02903 (US)**
Inventor: **Muskat, Irwin, 41 North Acres Road,**
**Manchester NH 03104 (US)**

(74) Representative: **Brooks, Nigel Samuel, Hebberdens**
**Lower Bordean, Petersfield Hampshire GU32 1ES**
**(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

## Description

INTRODUCTION

A trend in the meat industry is to produce value added products of a quality and convenience that justify their additional price. In this regard there has been a growing desideratum for portion prepared products that permit facile portion control and auditing besides being of good taste and appearance.

The present invention is directed to this need and is a process for producing a finely pre-sliced uniform roast meat of controlled weight and size, cooked evenly from end to end and prepared and packaged in such a manner as to be essentially free of premature bloom and loss of taste and appearance during storage, shipping and serving.

The invention is particularly, though not exclusively, suitable for a roast beef product, which, when cooked rare-to-medium, is particularly susceptible to blooming in the presence of air. Other meats for which the invention is suitable are veal, lamb, pork and mutton.

One of the many problems associated with the preparation and shipping of a pre-sliced roast beef product is that the beef slices are invariably exposed to oxygen which induces blooming to the delicate roast beef colour desired by the consumer well in advance of the consumer seeing the product, which premature blooming is then followed by undesirable browning and drying. Another problem is that it can be quite expensive to portion the roast beef in uniform small quantities or in individual servings for sandwiches or the like. If special shaping techniques are not employed, the roast beef prior to slicing will vary in size from end to end with the consequence that the slices therefrom vary in size and weight, making portion control difficult if not impossible. It has not heretofore been possible to reshape a whole primal cut of beef without destroying or undesirably distorting the connecting tissue which holds the slices when sliced intact, i.e. this tissue maintains the integrity of the primal cut.

A further problem has been that in the cooking of the roast beef the seasonings do not permeate the roast beef very well, being too much to the outside and too little on the inside.

This invention is addressed to these and related problems in the preparation, storage and delivery of a portion controlled pre-sliced meat product such as roast beef, corned beef, roast pork, and the like.

RELATED DISCLOSURES

1. "CKE's New Massage for Frozen Beef", ____ Meat Industry, March 1982, pp 16 et seq.

2. "Vacuum Massaging: A basic Approach" by Robert Benton, Meat processing, February 1982, pp 42 et seq.

3. United States Patents:
2,140,162 McKee 1938 99-107
3,753,741 Stewart 1973 99-187
4,356,205 Richards 1982 426-578

THIS INVENTION

The object of the invention is the production of a uniform, portion pre-sliced roast meat vacuum packaged product made without objectionable loss of original muscle, fibre and tissue.

According to one aspect of the invention there is provided a process of producing a packaged portion-sliced whole muscle cooked meat product without appreciable loss of muscle fibre and structure, comprising:

trimming a fresh boneless whole muscle primal piece of meat while leaving connective tissue;

massaging said piece so prepared along with others with added water and flavourings and allowing said piece to take up water, soften and express protein binder;

placing said piece so softened but still as a whole muscle into a shape-determining encasement having a substantially uniform cross-section end-to-end;

cooking said piece in said encasement to a uniform predetermined degree of doneness;

crust cooling said piece while still encased;

removing said piece from said encasement, said piece having and holding substantially the shape of said encasement;

slicing said piece to produce slices of uniform thickness while physically restraining the cooked meat so that said slices immediately close on themselves after slicing and said piece substantially retains its shape; and

vacuum packing said piece in an airtight container for shipment;

said slicing and all steps subsequent thereto being done in a manner to virtually exclude air from contacting the faces of said slices;

whereby said piece so packaged is a sliced whole muscle cooked meat product substantially all of the slices of which are of uniform weight and size.

Preferably the process includes the step of weighing said piece so sliced while maintaining the bulk of the slices in airtight contact and removing muscle end slices to establish the conformity of the weight of said piece to a predetermined weight.

According to another aspect of the invention there is provided a packaged portion pre-sliced whole muscle roast meat comprising an elongate generally cylindrical reshaped roast of a primal whole muscle cut of meat cooked uniformly from end-to-end and totally sliced perpendicular to the longitudinal axis into slices substantially all of which are of uniform weight and size held in a confining vacuum package, said roast meat having substantially all of the original muscle fibre and structure but being held in the cooked shape at least in substantial part by reason of natural protein binders expressed during processing and by original connective tissue, and said slices during slicing, and during all steps subsequent thereto, having been essentially free from air exposure to the faces thereof.

Preferably, the cut is trimmed to be fat- and gristlefree end-to-end. This trimming might be considered "abnormal" in as much as more is trimmed than is "normal" for a roast of this type. This is because if any substantial amounts of fat or gristle are left they may migrate during the forming step and create unsightly fat/gristle pockets. However, sufficient connective tissue is left to bridge the muscle and hold the shape of the cut after forming. Usually 80 or more weight per cent of a top round will remain after the trimming.

The massaging is be by vacuum tumbling of the meat which, as is known, softens it considerably besides extracting protein binder and prepares it for the subsequent shape forming step. Additional protein binder can be added during the tumbling step and/or protein binder promoters, e.g. phospates, can be added.

The tumbled piece is formed and placed into a tight cylindrical encasement that holds it in a round shape. Round blocks may be placed at either end of the casing to help set the dimensions of the roast.

The cooking of the rounds in the shaping cylinder is conventional. Preferably a thermocouple is placed in each round so that cooking is exact to the level desired without a variation of more than 5° F (2 3/4° C) from any one part to another.

Following cooking, the round is immediately crust chilled and allowed to rest for a time to allow the collagens to gel following which the cylindrical casing is removed. Some of the water added during tumbling is removed during cooking and the protein binder will have set up so that the round will reasonably firmly hold its shape.

The round is then sliced, preferably perpendicular to its longitudinal axis, by passing cross grain through a multi-blade slicer with very fine blades with all of the surfaces of the round preferably being confined as it approaches and enters the blades. The leading and rearward edges of the round are confined by being pressed between the preceding and succeeding rounds. As the blades pass through the meat the meat is temporarily parted and then closes immediately behind the blades so that there is substantially no opportunity for oxygen from the air to contact the faces of the slices and thus induce blooming. While it is possible to carry out this slicing in an inert gas atmosphere, there has so far appeared to be little need to do so if the proper slicing equipment is used and proper handling is observed.

A particular advantage of using a multi-blade slicer, which looks like a bread slicer except that the blades are much, much closer together, is that the blades move flavouring from the crust inwardly toward the centre of the slices. This flavouring during the subsequent storage and shipment of the round has an opportunity to permeate the meat and enhance its taste. No other portion sliced product is known to do this without objectionable blooming.

As the product is of a uniform diameter, preferably in the range of 4 to 6 inches (100 to 150 mm), plus or minus 1/4 inch (6 mm), from end to end, and as the slices are of uniform thickness, the slices are identical end-to-end and portion control is assured. For example, a cooked and sliced round of 5 1/4 inches (133 mm) diameter can have a weight of 7 1/2 pounds (3.4 kg), plus or minus 1 ounce (28 g). If the slices are 0.0625 inches (1.5 mm) thick, the round will yield 115 to 120 slices with over 90% of them weighing 1 ounce (28 g), plus or minus 1/4 ounce (7 g). This will permit a user to determine fairly exact sandwich count per roast giving good cost control and greatly discouraging if not eliminating pilferage without full awareness by management.

The user is able to avoid the usual messy and labour-consuming slicing of the roast beef or other meat and the attendant slicing shrinkage.

The roast meat product, in particular the roast beef product, retains practically all of its original muscle fibre and structure, e.g. at least 90% thereof. The roast and the slices therefrom retain their shape and have the texture, structure and firmness of a conventional roast beef.

In a preferred embodiment, the cooked, sliced round thus produced is packaged in a special one-use airtight vacuum pouch container that is rigid enough to be used as a serving container thus eliminating the need to dirty pans or the serving area. This container allows the roast product to remain in its natural juices until the time of serving, giving better serving colour and yield. Because of the method of preparation, the sliced product upon serving will bloom to an excellent colour and will continue to do so for about three or four days serving time from the opening of the container.

THE DRAWINGS

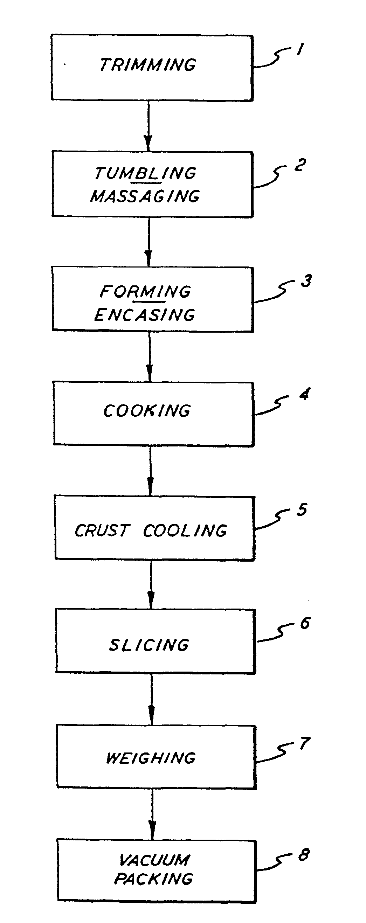

The drawing attached to and forming a part of the specification is a schematic flow diagram of the steps of the preferred process of this invention. The drawing illustrates the following steps:

1. Trimming
2. Tumbling/Massaging
3. Forming/Encasing
4. Cooking
5. Crust Cooling
6. Slicing
7. Weighing
8. Vacuum Packing

DESCRIPTION

In the first step a selected inside top round of 12-15 pounds is trimmed of fat, gristle, veins and loose flesh but leaving connective tissue. Usually the top round after trimming will be about 85% of the original weight.

In the second step batches of 75 to 100 rounds, e.g. 88, are put in a vacuum tumbler with 8 to 12%, e.g. 10% added water and with phosphates and spices or flavourings as desired. A suitable tumbler is manufactured by Globus Manufacturing Company, New York, New York. The product is tumbled for over 45 minutes, e.g.

65 minutes, with a few, e.g. three, rest periods of several minutes each, e.g. 5 minutes, at a vacuum of no less than 17 inches (432 mm) of mercury, e.g. 20 inches (508 mm). The temperature is preferably less than 40°F (4.5°C). The rounds at this point have taken up substantially all of the water and are soft and gooey with extracted protein which will serve as a binder later. If desired, extra protein binder can be added during the tumbling step as can a binder promoting material. The phosphate is added during tumbling to promote water uptake.

In step 3 the thus treated round is passed through a horn that forces it into a shaping cylinder that insures a perfect diameter. The roast is preferably extruded solid muscle end first. The other end is "split" because of some folding over of the sides of the roast at that end during the extrusion.

A cylindrical block can be placed in the end of the cylindrical form before extrusion and one can be forced onto the end of the extrudate. These can be locked into the ends of the encasement in a known manner.

In step 4 the rounds are placed in a large cook oven, for example one that will hold 200 pieces, with each round preferably having its own thermocouple. Cooking is carried out in a known manner for approximately 8 to 10 hours. The temperature is raised to a temperature that is uniform throughout the roast, preferably plus or minus 2 1/2°F (1 1/2°C) end-to-end. The roast can be cooked to any degree specified by the customer. For example, it can be cooked 9 hours raising the internal temperature of the roast to one in the range of 130° to 140°F (54° - 60°C) plus or minus 21/2°F (11/2°C) end-to-end. This is the temperature required to achieve a rare-to-medium roast.

After cooking, the product is rapidly crust chilled in step 5 to below 40°F (4.5°C) and is then ready for slicing. The casing and the shape forming end blocks are removed.

In step 6 the roast is examined for the firmest surface and that surface is kept to the rear in the slicing chamber. A suitable slicer is a Slice-N-Tack sold by Bettcher Industries, Vermillion, Ohio, 44089. This slicer looks much like a bread slicer except that the blades are set very close together, from 1.5 to 2.5 mm, e.g. 2 mm. As the roast is pushed through the slicer with the firmest surfaces to the rear, breakage is minimized. The next succeeding roast is used to complete the passage of the preceding roast through the slicer. Any breakage or open seam should be put face down in the slicing chamber as this helps to hold the seams closed and to reduce breakage during slicing. The top of the roast slides under and is confined by a surface or platen as it approaches the blades. The ends are similarly confined.

As the slices pass the blade, they immediately come together again, thus excluding air from contacting the faces of the slices and all but eliminating subsequent blooming of the slices.

The blades in passing through the slices draw down from the top juices and flavourings from the crust and smear them across the face of the slices. As the sliced roast is stored and shipped, these juices and flavourings have an opportunity to enhance the taste of the roast.

When the roast emerges from the slicer, a person weighs the roast in step 7 to see if it meets the desired weight, e.g. 71/2 pounds (3.4 kg). Normally, there will be excess weight and the weigher removes slices from the muscle end of the roast until the desired weight is reached. With a roast having a starting weight of 13 to 14 pounds (5.9 to 6.4 kg) before trimming, normally enough of the butt will be removed from 2 pieces so that every third roast can be made up of two butts brought together. If the roast has a cylindrical diameter of 51/2 inches (140 mm), the length of the roast will usually be about 9 inches (230 mm) to give a 71/2 pound (3.4 kg) weight. If each slice is approximately 0.0625 inches (1.5 mm) thick and weighs about 1 ounce (28 g) then the operator will be able to add or remove quite readily the desired number of slices to achieve the target weight. For example, if the roast after removing some of the muscle end weighs 7.2 pounds (3.27 kg) then the operator will know that adding five slices from the remaining portion will make the roast weigh about 7.5 pounds (3.4 kg).

The customer receiving every third roast that contains the two muscle end sections is not likely to complain that the roast is not continuous as it will be obvious to him that he has got the two best portions of the two rounds.

Following the weighing, the roast is placed in a roll stock vacuum packing machine such as one made by Tirmomat, a European firm whose machine is distributed by Kutter Sales, Randolph, Massachusetts. The packing material may be a trilaminate film such as one made of polyethylene/syrlon/ nylon. Preferably, the roasts are packaged two to a package with the bottom half of the container being in the shape of two upfacing adjacent half cylinders with closed confining ends to hold the roast shape, over which is placed a flat top sheet heat sealed to the edges of the bottom container. When the time comes to serve the roasts, the container can be used to bring the roasts up to the temperature desired and the top sheet of the container can be peeled back leaving the roasts in the confining two half cylindrical bottoms in their juices ready to serve. This gives a better yield and slices of better colour.

While the process has been described with particular reference to roast beef, one skilled in the art will appreciate that it can also be applied to other primal cuts used, such as of veal, lamb, pork and mutton, which can be fresh or cured, such as a corned beef. While the process is most advantageously applied to a single solid muscle, the meat can be in smaller pieces such that, for example, it takes at least 10 pieces to make up one roast.

Essentially no objectionable change in taste in the product occurs from preparation to serving and essentially no premature blooming takes place during storage and shipping.

A particular advantage of this process resides in the fact that it can process range-fed beef to good advantage. The consuming public has become used to the consistent flavour and uniformity of commercial grain-fed beef. Because of the cost of energy and grain, range-fed beef in the future will have a price advantage. Range-fed beef, however, varies more widely in taste and texture than grain-fed beef. The present process reduces the wide variation in texture and taste of the range-fed beef by at least 50% if not more.

The uniformity of the size of the roast of this invention and of the slices allows the consumer quite some accuracy in dispensing the roast and in establishing cost control. The product comes to the consumer completely sliced and the consumer may avoid messy and labour-consuming operations and loss due to slicing shrinkage. The slice uniformity allows axact sandwich count per roll and discourages pilferage. By proper trimming of the roast to start, the roast of this invention offers more lean meat per sandwich.

Of primary importance is that the roast does not undergo blooming during storage and shipping as a result of the slicing. When its container is opened by the customer the roast beef slices bloom and develop good colour and appearance. This good colour will remain through 3 or 4 days of serving.

The roast beef can of course be cooked to a customer's specification if a greater or lesser degree of doneness is desired.

## Claims

1. A process of producing a packaged portion-sliced whole muscle cooked meat product without appreciable loss of muscle fibre and structure, comprising:

trimming a fresh boneless whole muscle primal piece ofmeat while leaving connective tissue;

massaging said piece so prepared along with others with added water and flavourings and allowing said piece to take up water, soften and express protein binder;

placing said piece so softened but still as a whole muscle into a shape-determining encasement having a substantially uniform cross-section end-to-end;

cooking said piece in said encasement to a uniform predetermined degree of doneness;

crust cooling said piece while still encased;

removing said piece from said encasement, said piece having and holding substantially the shape of said encasement;

slicing said piece to produce slices of uniform thickness while physically restraining the cooked meat so that said slices immediately close on themselves after slicing and said piece substantially retains its shape; and

vacuum packing said piece in an airtight container for shipment;

said slicing and all steps subsequent thereto being done in a manner to virtually exclude air from contacting the faces of said slices;

whereby said piece so packaged is a sliced whole muscle cooked meat product substantially all of the slices of which are of uniform weight and size.

2. A process as claimed in claim 1, wherein said piece of meat is beef and said cooking step comprises cooking rare-to-medium said piece of beef.

3. A process as claimed in claim 1 or claim 2, including the step of weighing said piece so sliced, while maintaining the bulk of the slices in airtight contact and removing muscle end slices to establish the conformity of the weight of said piece to a predetermined weight.

4. A process as claimed in claim 1, claim 2 or claim 3, wherein said massaging is performed by tumbling said piece in a tumbler.

5. A process as claimed in any preceding claim, wherein said piece is squared at its ends by use of end blocks in said encasement and said slicing of said piece is carried out perpendicular to the longitudinal axis thereof by a single pass through a multi-blade slicer.

6. A process as claimed in any preceding claim, wherein said piece is cooked to a temperature in the range of 130° - 140° F (54° - 60° C), plus or minus 21/2° F (11/2° C) endto-end.

7. A process as claimed in any preceding claim, wherein said piece is sliced in sequence with other like pieces with one piece being used to urge the preceding piece through the slicer and with the firmest side of each piece being last to enter the slicer.

8. A process as claimed in claim 3 or any one of claims 4 to 7 as appendant to claim 3, wherein said roast beef product is generally cylindrical about 9 inches (230 mm) long, weighs about 71/2 pounds (3.4 kg) and has a diameter of 5 1/4 inches (133 mm) plus or minus 1/4 inch (6 mm) from end to end and each slice is about 0.0625 inches (1.5 mm) thick, and weighs 1 ounce (28 g), plus or minus 1/4 ounce (7 g).

9. A process as claimed in claim 3 or any one of claims 4 to 8 as appendant to claim 3, wherein said piece is heavier than said desired weight and slices are removed from the muscle end of said piece to achieve said desired weight.

10. A process as claimed in claim 9, wherein approximately every third packaged cooked meat product has two of the sliced muscle sections placed together to form a packaged product of the desired weight.

11. A process of producing a packaged portion presliced whole muscle rare-to-medium roast beef product without appreciable loss of muscle fibre and structure, comerising the steps of:

1) preparing as one of a series a fresh whole muscletop round of beef free of bone and weighing at least 12 pounds (5.5 kg) by trimming fat, gristle and veins while leaving connective tissue, the trimmed weight being at least 80% of the original weight;

2) directly, without intermediate processing steps, vacuum tumbling the piece so prepared along with others with added water and flavourings allowing said piece to take up water and soften, in the range of 8 to 12% water being taken up by the meat;

3) extruding said piece so tumbled and softened into a tight circular cook casing having a uniform diameter from end-to-end with the solid muscle end leading and with the ends being squared by the use of end blocks;

4) cooking said piece while so encased to an internal temperature in the range of 130° to 140°F (54° - 60°C), plus or minus 2 1/2°F (1 1/2°C) end-to-end;

5) crust cooling said piece while still encased to below 40°F (4.5°C);

6) removing said cook casing, said piece now having and holding a substantially uniform diameter end-to-end; and

7) while applying confining pressure to the sides and ends thereof, slicing said piece cross grain through a multi-blade slicer producing slices of a uniform thickness; said slices immediately closing on themselves after slicing and said piece substantially retaining its shape, the slicing being accomplished in a manner to virtually exclude air from contacting the faces of said slices;

8) weighing said piece so sliced while maintaining the bulk of the slices in airtight contact and removing muscle end slices to establish the conformity of the weight of said piece to a predetermined weight for all the roasts of said series; and

9) vacuum packing said piece so weighed in an airtight container for storage and/or shipment; whereby the product so produced and the slices thereof are of substantially uniform weight and size for said series and said slices remain free of any appreciable blooming prior to unpackaging.

12. A packaged portion pre-sliced whole muscle roast meat comprising an elongate generally cylindrical reshaped roast of a primal whole muscle cut of meat cooked uniformly from end-to-end and totally sliced perpendicular to the longitudinal axis into slices substantially all of which are of uniform weight and size held in a confining vacuum package, said roast meat having substantially all of the original muscle fibre and structure but being held in the cooked shape at least in substantial part by reason of natural protein binders expressed during processing and by original connective tissue, and said slices during slicing, and during all steps subsequent thereto, have been essentially free from air exposure to the faces thereof.

13. The roast meat of claim 12, wherein said primal cut is a top round of beef and said roast beef is cooked rare-to-medium and while packaged remaining free of premature blooming.

14. The roast meat of claim 13, wherein said roast beef has a diameter of 5 1/4 inches (133 mm), plus or minus 1/4 inch (6 mm), a length of about 9 inches (230 mm), a weight of approximately 7 1/2 pounds (3.4 kg), at least 90% of the slices thereof having a weight of 1 ounce (28 g), plus or minus 1/4 ounce (7 g), and with there being in the range of 115 to 125 slices par roast.

15. The roast meat of claim 14, wherein said roast beef is one of a series, said series comprising at least two packaged roasts having the split end of the reshaped primal cut and one packaged roast having at least two muscle ends.

**Patentansprüche**

1. Verfahren zur Herstellung, einer verpackten, scheibenweise portionierten, gekochten Vollmuskel-Fleischware ohne merklichen Verlust von Muskelfaser und -struktur, gekennzeichnet durch:
- Zurechtputzen eines frischen, knochenfreien Vollmuskel-Hauptfleischstückes unter Belassung eines zusammenhängenden Gewebes;
- Massieren dieses so vorbereiteten Stückes nebst weiteren Stücken mit zugefügtem Wasser und Gewürzen und dem Stück Gelegenheitgeben, Wasser aufzunehmen, weich zu werden und Proteinbinder auszudrücken;
- Eingeben des so aufgeweichten, aber noch als Vollmuskel vorliegenden Stückes in eine Formgebungs-Umhüllung, welche von Anfang bis Ende im wesentlichen gleichen Querschnitt aufweist;
Kochen des Stückes in der Umhüllung bis zu einem gleichmäßigen vorbestimmten Garungsgrad; Kühlen der Kruste des noch umhüllten Stückes; Herausbringen des Stückes aus der Umhüllung, wobei das Stück die Form der Umhüllung hat und behält;
Schneiden des Stückes in gleichdicke Scheiben, während das gekochte Fleisch physisch so zusammengehalten wird, daß sich die Scheiben nach dem Schneiden unmittelbar eng aneinander anlegen und daß das Stück im wesentlichen seine Form beibehält; und
- Vakuumverpacken des Stückes in einem luftdichten Versandbehälter;
- das erwähnte Schneiden und alle darauffolgenden Schritte werden in einer solchen Weise ausgeführt, daß praktisch eine Berührung der Scheibenflächen mit Luft ausgeschlossen ist;
- wobei das so verpackte Stück eine geschnittene, gekochte Vollmuskel-Fleischware ist, bei der alle Scheiben mit gleichem Gewicht und gleicher Größe vorliegen.

2. Verfahren nach Anapruch 1, dadurch gekennzeichnet, daß das Stück aus Rindfleisch besteht und daß im Verfahrensschritt Kochen das Rindfleischstück halbgar-bis-medium gekocht wird.

3. Verfahren nach Anspruch 1 oder 2, gekennzeichnet durch den Verfahrensschritt Wiegen des so geschnittenen Stückes, wobei die Masse der Scheiben in luftabdichtender Berührung gehalten wird und wobei Muskelendscheiben entfernt werden, um eine Übereinstimmung des Gewichtes dieses Stückes mit einem vorgegebenen Gewicht herzustellen.

4. Verfahren nach den Ansprüchen 1,2 oder 3, dadurch gekennzeichnet, daß das Massieren durch Umwälzen des Stückes in einer Trommel ausgeführt wird.

5. Verfahren nach einem der vorangegangenen Ansprüche, dadurch gekennzeichnet, daß das Stück an seinen Enden durch Verwendung von Endblöcken innerhalb der Umhüllung rechtwinklig gemacht wird und daß das Schneiden des Stückes senkrecht zu seiner Längsachse in einem Einzelschritt durch eine Schneidvorrichtung mit Mehrfachklingen ausgeführt wird.

6. Verfahren nach einem vorangegangenen Anspruch, dadurch gekennzeichnet, daß das Stück von Anfang bis Ende bei einer Temperatur im Bereich von 130°- 140° F (54° 60° C) 2 1/2° F (1 1/2° C) gekocht wird.

7. Verfahren nach einem vorangegangenen Anspruch, dadurch gekennzeichnet, daß das Schneiden des Stückes in Aufeinanderfoge mit anderen gleichen Stücken erfolgt, wobei jeweils ein Stück benutzt wird, um das vorhergehende Stück durch die Schneidvorrichtung zu drücken und wobei die festeste Seite jedes Stückes zuletzt in die Schneidvorrichtung eintritt.

8. Verfahren nach Anspruch 3 oder einem der Ansprüche 4-7 in Abhängigkeit von Anspruch 3, dadurch gekennzeichnet, daß diese fertiggemachte Rindfleischware im wesentlichen zylindrisch ist mit einer Länge von etwa 9 Zoll (230 mm), einem Gewicht von etwa 7 1/2 Engl. Pfd. (3,4 kg) und mit einem Durchmesser von 5 1/4 Zoll (133 mm) plus oder minus 1/4 Zoll (6 mm) von Anfang bis Ende und daß jede Scheibe etwa 0,0625 Zoll (1,5 mm) dick ist und 1 Unze (28 g) plus oder minus 1/4 Unze (7 g) wiegt.

9. Verfahren nach Anspruch 3 oder einem der Ansprüche 4-8 in Abhängigkeit von Anspruch 3, dadurch gekennzeichnet, daß das Stück schwerer ist als das gewünschte Gewicht und daß Scheiben von dem Muskelende dieses Stückes entfernt werden, um das gewünschte Gewicht zu erreichen.

10. Verfahren nach Anspruch 9, dadurch gekennzeichnet, daß annähernd jede dritte abgepackte, gekochte Fleischware zwei der geschnittenen Muskelsektionen aneinandergesetzt aufweist, um eine abgepackte Fleischware von dem gewünschten Gewicht zu erreichen.

11. Verfahren zur Herstellung einer abgepackten, portionsweise vorgeschnittenen, halbgar-bis-medium fertiggemachten Vollmuskel-Rindfleischware ohne merklichen Verlust an Muskelfaser und -struktur, gekennzeichnet durch die Schritte:

1) Vorbereiten einer aus einer Serie anfallenden, frischen Vollmuskel-Spitzenrindskeule, die knochenfrei ist und mindestens 12 Engl. Pfd. (5,5 kg) wiegt durch Freiputzen von Fett, Knorpel und Adern unter Belassung eines zusammenhängenden Gewebes, wobei das Putzgewicht mindestens 80 % des Ursprungsgewichtes beträgt;

2) unmittelbar folgendes Umwälzen, ohne Zwischenbehandlungsschritt, des so präparierten Stückes unter Vakuum zusammen mit anderen Stücken, wobei Wasser und Gewürze zugegeben werden und es dem Stück erlaubt wird, Wasser aufzunehmen und weich zu werden, wobei Wasser in einem Bereich von 8 - 12 % von dem Fleisch aufgenommen wird;

3) Extrudieren dieses so umgewälzten und weichgemachten Stückes in ein festes kreisförmiges Kochgehäuse, welches einen gleichmäßigen Durchmesser von Anfang bis Ende aufweist, wobei das feste Muskelende voraneilt und wobei die Enden unter Verwendung von stirnseitigen Blöcken rechtwinklig gemacht werden;

4) Kochen des derart eingeschlossenen Stückes bis zu einer Innentemperatur im Bereich von 130°- 140° F (54°- 60° C) plus oder minus 2 1/2° F (1 1/2° C) von Anfang bis Ende;

5) Oberflächenkühlung des Stückes, während dieses noch umhüllt ist, unter 40° F (4,5° C);

6) Entfernen des Kochgehäuses, wobei das Stück jetzt von Anfang bis Ende einen im wesentlichen gleichen Durchmesser hat und behält; und

7) Schneiden des Stückes, während auf seine Seiten und Enden ein Druck zum Zusammenhalten ausgeübt wird, quer zur Faserung in Scheiben mittels einer Mehrklingen-Schneidvorrichtung, wobei Scheiben gleicher Dicke hergestellt werden; diese Scheiben legen sich unmittelbar nach dem Schneiden eng aneinander an und das Stück behält im wesentlichen seine Geatalt, wobei das Schneiden in einer Art ausgeführt wird, daß praktisch eine Berührung der Flächen der Scheiben mit Luft ausgeschlossen wird;

8) Abwiegen des so in Scheiben geschnittenen Stückes, während die Masse der Scheiben in luftdichter Berührung ehalten wird, und Entfernen von Muskelendscheiben, um eine Übereinstimmung des Gewichtes des Stückes mit einem vorbestimmten Gewicht für alle Fertigfleischwaren dieser Serie zu erreichen; und

9) Vakuumverpacken dieses so abgewogenen Stückes in einem luftdichten Speicher -und/oder Versandbehälter, wobei die so hergestellte Ware und ihre Scheiben im wesentlichen gleiches Gewicht und gleiche Größe für diese Serie aufweisen und die Scheiben frei bleiben von jeglichem merklichen Ausblühen, bevor sie ausgepackt werden.

12. Abgepacktes, portionsweise vorgeschnittenes Vollmuskel-Fertigfleisch, bestehend aus einem länglichen, im wesentlichen zylindrischen, wiedergeformten Fertigstück aus einem ursprünglichen Vollmuskelfleischteil, welches gleichförmig von Ende bis Ende gekocht und senkrecht zu seiner Längsachse insgesamt in Scheiben geschnitten ist, welche im wesentlichen gleiches Gewicht und Größe besitzen und in einer sie einschließenden Vakuumverpackung gehalten sind, das Fertigfleischstück besitzt im wesentlichen die gesamte ursprüngliche Muskelfaserung und -struktur, jedoch ist es in der gekochten Form zumindest im wesentlichen Teil aufgrund der natürlichen Proteinbinder gehalten, die während der Behandlung ausgedrückt werden, und durch das ursprüngliche, zusammenhängende Gewebe, und daß die Scheiben während des Schneidens und aller nachfolgenden Schritte von einem Aussetzen ihrer Flächen an Luft im wesentlichen bewahrt worden sind.

13. Fertigfleisch nach Anspruch 12, dadurch gekennzeichnet, daß der ursprüngliche Teil eine Spitzenrindskeule ist und daß das Fertigrindfleisch halbgar-bis-medium gekocht ist und im verpackten Zustand frei von vorzeitigem Ausblühen ist.

14. Fertigfleisch nach Anspruch 13, dadurch gekennzeichnet, daß das fertiggemachte Rindfleisch einen Durchmesser von 5 1/4 Zoll (133 mm), plus oder minus 1/4 Zoll (6 mm), eine Länge von etwa 9 Zoll (230 mm), ein Gewicht von annähernd 7 1/2 Engl. Pfd. (3,4 kg) aufweist und daß zumindest 90 % seiner Scheiben ein Gewicht von 1 Unze (28 g) plus oder minus 1/4 Unze (7 g) besitzt und daß jeweils étwa 115 bis 125 Scheiben je Fertigfleischware vorliegen.

15. Fertigfleisch nach Anspruch 14, dadurch gekennzeichnet, daß das fertiggemachte Rindfleisch eines aus einer Serie ist, wobei die Serie zumindest zwei Abpackungen enthält, die das gespaltene Ende des wiedergeformten ursprünglichen Teiles aufweisen, und eine Packung, welche mindestens zwei Muskelenden aufweist.

**Revendications**

1. Procédé de production d'une viande cuite entièrement en muscle, découpée en tranches et emballée sans perte notable des fibres et de la structure des muscles, qui consiste:

à tailler un morceau de viande fraîche sans os entièrement en muscle tout en laissant les tissus conjonctifs;

à malaxer ledit morceau ainsi préparé avec d'autres, avec addition d'eau et de condiments et à laisser le morceau absorber de l'eau, se ramollir et libérer le liant protéique;

à placer ledit morceau ainsi ramolli mais toujours sous forme d'un muscle entier dans une enceinte de conformation présentant de bout en bout une section transversale sensiblement uniforme;

à cuire ledit morceau dans l'enceinte jusqu'à un degré de cuisson uniforme prédéterminé;

à refroidir par la croûte ledit morceau pendant qu'il est toujours dans son enceinte;

à enlever ledit morceau de l'enceinte, ledit morceau ayant et maintenant sensiblement la forme de l'enceinte;

à découper ledit morceau pour former des des tranches d'épaisseur uniforme tout en retenant physiquement la viande cuite de manière à ce que les tranches se referment immédiatement sur elles-mêmes après le découpage et que ledit rôti conserve sensiblement sa forme; et

à emballer sous vide ledit morceau dans un récipient étanche à l'air pour expédition;

ledit découpage en tranches et tous les stades qui lui font suite se faisant de façon à exclure virtuellement tout contact de l'air avec les faces des tranches; de sorte que ledit rôti ainsi emballé est un produit de viande cuite entièrement en muscle découpé en tranches dont sensiblement toutes les tranches sont d'un poids et d'une dimension uniformes.

2. Procédé selon la revendication 1, dans lequel ledit morceau de viande est du boeuf et ledit stade de cuisson consiste à cuire ce morceau de boeuf à un degré intermédiaire entre saignant et à point.

3. Procédé selon la revendication 1 ou 2, comportant le stade de pesage dudit morceau ainsi coupé en tranches tout en maintenant la masse des tranches en contact étanche à l'air et d'enlèvement des tranches d'extrémité côté muscle pour établir la conformité du poids du morceau avec un poids prédéterminé.

4. Procédé selon la revendication 1, 2 ou 3, dans lequel on effectue le malaxage en agitant ledit rôti dans un agitateur à tambour.

5. Procédé selon l'une quelconque des revendications précédentes, dans lequel on rectifie ledit morceau aux extrémités en utilisant des blocs terminaux dans ladite enceinte et on effectue ledit découpage en tranches du morceau perpendiculairement à son axe longitudinal par un passage unique à travers un appareil de découpage en tranches à lames multiples.

6. Procédé selon l'une quelconque des revendications précédentes, dans lequel on cuit le morceau à une température allant de 54 à 60°C (130 à 140°F) ± 1,5°C (2,5°F) de bout en bout.

7. Procédé selon l'une quelconque des revendications précédentes, dans lequel on coupe lemorceau en succession avec d'autres morceaux analogues, un morceau servant à pousser le morceau précédent pour le faire passer à travers l'appareil de découpage en tranches, la partie la plus ferme de chaque morceau étant la dernière à entrer dans l'appareil de découpage.

8. Procédé selon la revendication 3 ou l,une quelconque des revendications 4 à 7 rattachées à la revendication 3, dans lequel ledit rôti de boeuf dans l'ensemble cylindrique, avec une longueur d'environ 230 mm (9 "), pesant environ 3,4 kg 7,5 lb) et ayant un diamètre de 133 mm (5 1/4 ") ± 6 mm (1/4 ") de bout en bout et chaque tranche à une épaisseur d'environ 1,5 mm ((0,0625 ") et pèse 28 g (1 oz) ± 7 g (1/4 oz).

9. Procédé selon la revendication 3 ou l'une quelconque des revendications 4 à 8 rattachées à la revendication 3, dans lequel le morceau est plus lourd que ledit poids désiré et on enlève des tranches de l'extrémité côté muscle dudit morceau pour établir ledit poids désiré.

10. Procédé selon la revendication 9, dans lequel environ chaque troisième produit de viande cuite et emballée comporte deux des parties de muscles déccupées en tranches qu'on place ensemble pour former un produit emballé de poids désiré.

11. Procédé de production d'un rosbif de muscle entier cuit entre saignant et à point, prédécoupé en tranches et emballé sans perte notable de fibres et de structure musculaires, comportant les stades qui consistent:

1) à préparer en tant que l'un d'une série, un gîte à la noix supérieur tout en muscle et frais, desossé et pesant au moins 5,5 kg (12 lb), en taillant pour enlever la graisse, les cartilages et les veines tout en laissant les tissus conjonctifs, le poids après taillage étant d'au moins 80% du poids initial;

2) directement sans aucun stade de traitement intermédiaire, à agiter sous vide le morceau ainsi préparé avec d'autres en ajoutant de l'eau et des agents d'aromatisation pour permettre au morceau d'absorber de l'eau et de se ramollir, une quantité de 8 à 12% d'eau étant absorbée par la viande;

3) à extruder ledit morceau ainsi agité et ramolli pour le faire pénétrer dans une enceinte circulaire serrée de cuisson ayant un diamètre uniforme de bout en bout, l'extrémité côté muscle plein étant en tête et les extrémités étant égalisées à l'aide de blocs terminaux;

4) à cuire ledit morceau dans son enceinte à une température interne allantde 54 à 60°C (130 à 140°F) ± 11/2°C (21/2°F) de bout en bout;

5) à refroidir par la croûte ledit morceau encore dans l'enceinte jusqu'à une température au-dessous de 4,5°C (40°F);

6) à enlever l'enceinte de cuisson, ledit morceau ayant maintenant, etconservant un diamètre sensiblement uniforme d'un bout à l'autre; et

7) tout en appliquant une pression de confinement sur les côtés et les extrémités du morceau, à le couper en tranches en travers du fil à l'aide d'un appareil de découpage en tranches à lames multiples donnant des tranches d'une épaisseur uniforme; lesdites tranches se refermant immédiatement sur elles-mêmes après le découpage et ledit morceau conservant sensiblement sa forme, le découpage en tranches étant effectué de façon à virtuellement exclure tout contact de l'air avec les surfaces desdites tranches;

8) à peser le morceau ainsi coupé en tranches tout en maintenant la masse des tranches en contact étanche à l'air et à enlever les tranches terminales côté muscle pour assurer la conformité du poids de ce morceau avec un poids prédéterminé pour tous les rôtis de la série; et

9) à emballer sous vide le morceau ainsi pesé dans un récipient étanche à l'air pour emmagasinage et/ou expédition; de sorte que le produit ainsi obtenu et ses tranches sont d'un poids et d'une dimension sensiblement uniformes pour ladite série et lesdites tranches sont à l'abri d'un épanouissement notable avant le déballage.

12. Viande rôtie entièrement en muscle prédécoupée en tranches formant portions et emballée, comprenant un rôti reformé et allongé sensiblement cylindrique à une coupe de viande de muscle entière cuite de façon uniforme d'un bout à l'autre et entièrement découpée perpendiculairement à l'axe longitudinal pour former des tranches ayant toutes un poids et une dimension uniformes qu'on maintient dans un emballage de confinement sous vide ladite viande rôtie ayant sensiblement la totalité des fibres et de structure des muscles initiaux mais étant maintenue dans la forme cuite au moins en grande partie par suite des liants protéiques naturels exprimés au cours du traitement et par les tissus conjonctifs initiaux, et les dites tranches pendant le découpage en tranches et tous les stades faisant suite à celui-ci étant sensiblement à l'abri d'une exposition à l'air sur les faces des tranches.

13. Viande rôtie selon la revendication 12, dans laquelle ladite coupe est un gîte supérieur de boeuf et on cuit ledit rôti à un degré intermédiaire entre saignant et à point, et le rôti restant à l'abri d'un épanouissement prématuré pendant qu'il est emballé.

14. Viande rôtie selon la revendication 13, dans lequel ledit rosbif a un diamètre de 133 mm (51/4 ") ± 6 mm (1/4 "), une longueur d'environ 230 mm (9"), un poids d'environ 3,4 kg (71/2 lb), au moins 90% des tranches pesant 28 g (1 oz) ± 7 g (1/4 oz) et on obtient au total 115 à 125 tranches par rôti.

15. Viande rôtie selon la revendication 14, dans laquelle ledit rosbif est l'un de ceux d'une série, ladite série comprenant au moins deux rôtis emballés comportant l'extrémité fendue de la coupe reformée et un rôti emballé comportant au moins deux extrémités côté muscle.

| | |
|---|---|
| **TRIMMING** | 1 |

↓

| | |
|---|---|
| **TUMBLING MASSAGING** | 2 |

↓

| | |
|---|---|
| **FORMING ENCASING** | 3 |

↓

| | |
|---|---|
| **COOKING** | 4 |

↓

| | |
|---|---|
| **CRUST COOLING** | 5 |

↓

| | |
|---|---|
| **SLICING** | 6 |

↓

| | |
|---|---|
| **WEIGHING** | 7 |

↓

| | |
|---|---|
| **VACUUM PACKING** | 8 |